Europäisches Patentamt

European Patent Office

Office européen des brevets

(19)

(11) **EP 0 774 646 B1**

(12) **EUROPÄISCHE PATENTSCHRIFT**

(45) Veröffentlichungstag und Bekanntmachung des Hinweises auf die Patenterteilung:
**13.02.2002 Patentblatt 2002/07**

(51) Int Cl.$^7$: **G01B 11/275**

(21) Anmeldenummer: **95117953.0**

(22) Anmeldetag: **14.11.1995**

(54) **Verfahren und Vorrichtung zum Vermessen der Achsen und Radstellungen von Kraftfahrzeugen**

Procedure and device to assess the axes and the wheel positions on cars

Procédé et dispositif pour vérifier l'alignement des axes et des roues de voitures automobiles

(84) Benannte Vertragsstaaten:
**DE FR GB IT**

(43) Veröffentlichungstag der Anmeldung:
**21.05.1997 Patentblatt 1997/21**

(73) Patentinhaber: **Knestel Elektronik GmbH**
**87496 Hopferbach (DE)**

(72) Erfinder: **Knestel, Anton**
**D-87496 Hopferbach (DE)**

(74) Vertreter: **Beetz & Partner Patentanwälte**
**Steinsdorfstrasse 10**
**80538 München (DE)**

(56) Entgegenhaltungen:
EP-A- 0 664 436          WO-A-88/09913
DE-A- 3 311 945          FR-A- 2 687 468
FR-A- 2 690 520          GB-A- 1 423 373

## Beschreibung

Die Erfindung betrifft Verfahren und Vorrichtungen zum Vermessen der Achsen und Radstellungen von zweispurigen Kraftfahrzeugen zur Ermittlung u. a. der Spur, des Sturzes, der Spreizung, des Nachlaufs u. dgl.

Derartige Meßverfahren und Vorrichtungen sind seit langem in einer Vielzahl von Ausführungen bekannt und werden von den Fahrzeugherstellern sowie bei der gesetzlich vorgeschriebenen Überprüfung der Kraftfahrzeuge ebenso wie in Wartungs- und Reparaturbetrieben zur Sicherung der Fahreigenschaften des Kraftfahrzeuges eingesetzt.

In der DE-B 2 841 844 ist ein gattungsgemäßes Verfahren beschrieben, mit dem der Sturz und die Spur auf relativ einfache Weise mittels zweier schwenkbar auf einer achszentrierten Welle gelagerter Sensoren gemessen werden können. An einer über mehrere Arme außen an der Radfelge montierbaren Halterung ist ein Meßkopf auf einer zur Radachse zentrierbaren Welle frei drehbar gelagert, der zwei Neigungssensoren enthält und durch sein Eigengewicht auch nach einer Verdrehung des Fahrzeugrades um vorbestimmte Winkelbeträge von z. B. 90° und 180° zumindest annähernd in seiner vorbestimmten Meß- und Raumlage gehalten wird. Verwendung finden zwei verschiedenartige Sensortypen, und zwar einmal ein gravitations-empfindlicher Sturzsensor und zum anderen ein elektro/optischer Spursensor, der am freien Ende eines über den Radumfang vorstehenden horizontal ausgerichteten Meßarms befestigt ist. Die jedem Fahrzeugrad zugeordneten Meßköpfe sind mit einer stationären Steuereinheit verbunden, deren Mikroprozessor aus den Ausgangssignalen der verschiedenen Sensoren die Winkelwerte für den Sturz und die Spur errechnet, und zwar unter Kompensation von Ausschlagfehlern bzw. Taumelbewegungen durch ungenaue Fluchtung der Meßkopfwelle zur Radachse. Bei dem auf einer Fahrbahn oder auf antreibbaren Rollenpaaren aufstehenden Fahrzeug sind für einen kompletten Meßvorgang jeweils drei Messungen erforderlich, wobei die zweite und die dritte Messung nach einer definierten Verdrehung des Fahrzeugrades um 180° und um 90° vorgenommen wird.

Aus der DE-B 3 904 557 ist eine Vorrichtung zur Messung der Radstellungen von zweispurigen Kraftfahrzeugen bekannt, bei der an der Felge jedes Fahrzeugrads ein Meßkopf über eine achszentrierbare Halterung befestigt wird. Jeder Meßkopf enthält als Meßelement für die vertikalen Winkel einen sog. elektro-optischen Inklinometer, der ein frei beweglich aufgehängtes Pendel mit einer darin befestigten Lichtquelle zur Erzeugung eines vertikalen Lichtstrahls und als Empfänger eine als CCD-Zeile ausgebildete Sensorzeile aufweist. Zur Messung der horizontalen Winkel ist eine vom Meßkopf gesonderte Lichtquelle vorgesehen, deren horizontale Lichtstrahlen ebenfalls auf die CCD-Zeile treffen. Eine mit den Meßköpfen aller Fahrzeugräder über Kabel oder berührungsfrei z. B. über Funk gekoppelte elektronische Steuereinrichtung taktet die beiden Lichtquellen in zeitabhängiger Folge, so daß die vertikalen und auch die horizontalen Winkel von jeweils nur einer Sensorzeile erfaßt werden können.

Ferner ist aus der EP-B 0 053 065 eine Meßvorrichtung für die Radstellungen von zweispurigen Kraftfahrzeugen bekannt, bei der eine Lichtquelle und ein Linsensystem im Inneren eines Meßarms angeordnet sind, der über eine vertikale Tragplatte und einen Querbolzen an einer am Fahrzeugrad msontierten Halterung verstellbar befestigt wird. Der sich parallel zur Radebene horizontal erstreckende Arm ist teleskopartig ausgebildet und trägt am freien Ende seines inneren verschiebbaren Armteils einen um 45° schräggestellten Spiegel, eine Schlitzblende sowie eine Meßplatte mit Skalen. Durch Aus- und Einschieben des Teleskoparmes kann diese Vorrichtung an unterschiedliche große Räder auf einfache Weise angepaßt werden.

Bei der Montage der Meßköpfe an den Fahrzeugrädern bzw. deren Felgen ergeben sich in der Regel Winkelfehler zwischen der Ebene des Fahrzeugrades und der Ebene des Meßkopfes z. B. durch Felgenschlag, die bei einer Verdrehung des Rades zu einem Taumelschlag und damit zu fehlerhaften Ergebnissen der nachfolgenden Spur- oder Sturzmessungen führen. In der eingangs genannten DE-B 28 41 844 und auch in der DE-A 23 13 087 sind Verfahren beschrieben, bei denen das Fahrzeugrad oder auch der Meßkopf manuell verdreht und die in jeder dieser Winkelstellungen sich ergebenden seitlichen Ausschlagsbewegungen durch Tastendruck in einer Steuereinheit gespeichert werden. Auf der Basis dieser gespeicherten Daten erfolgt anschließend eine Korrektur der gemessenen Spur- oder Sturzwinkel. Eine ähnliche Vorgehensweise ist in der DE-A 2 855 781 beschrieben, wobei hier der Sturzwinkel während einer 360°-Drehung des Fahrzeugrades kontinuierlich erfaßt und aus den abgespeicherten Maximal- und Minimal-Werten ein den Taumelschlag berücksichtigender Korrekturwert ermittelt wird.

Bei nahezu allen bekannten Verfahren und Vorrichtungen zum Vermessen der Radstellungen von Kraftfahrzeugen ist es notwendig, das jeweilige Kraftfahrzeug z. B. mittels einer am Rahmen angreifenden Hebebühne anzuheben, um die auf diese Weise entlasteten Fahrzeugräder frei durchdrehen zu können. Bei den modernen komfortablen Kraftfahrzeugen mit relativ weicher Radaufhängung erfolgt bekanntlich nach jeder Anhebung und Entlastung der Rad-Feder-Systeme mit nachfolgender Absetzung des Kraftfahrzeuges auf die Fahrbahn eine Fehlausrichtung der Bauteile, insbesondere der Fahrzeugräder, die erst nach einigen Fahrkilometern wieder ihre ursprüngliche Lage einnehmen. Neben dem größeren Aufwand durch die erforderliche Anhebung des Kraftfahrzeuges ergeben sich somit bei diesen herkömmlichen Vorgehensweisen vom jeweiligen Rad-Feder-System und dessen Betriebszustand abhängige Meßfehler. Für die Messung der horizontalen Winkel, insbesondere der Spurwinkel, werden üblicherweise optische Meßsysteme eingesetzt, die mehrere nacheinander angesteuerte Sendeelemente sowie ein oder mehrere von diesen ggf. taktweise detektierten Empfangselemente aufweisen können (vgl. DE-A 35 31 459).

Schließlich ist aus der DE-A-39 04 557 ein System bekannt, bei dem über einen einzigen optischen Sensor, der mehrere nebeneinander angeordnete Empfangselemente und getaktet aktivierte Lichtsendeelemente aufweist, die Spur- und die Sturzwinkel erfaßt werden. Die Winkel für die Spur und den Sturz müssen jedoch sequentiell gemessen werden, was die Systemgeschwindigkeit herabsetzt. Ein eingebautes freibewegliches Pendel ist mit einer Lichtquelle versehen und bildet einen gravitationsempfindlichen Neigungssensor.

Bei Radstellungsmeßgeräten ohne äußeres Bezugssystem müssen, um Meßfehler durch Verspannungen zu verhindern, unter den zu vermessenden Rädern schwimmende Platten unterlegt sein. Dies wird speziell an der lenkbaren Vorderachse durch sogenannte Drehteller realisiert. Grundsätzlich können die Teller in X- und Y-Richtung frei bewegt werden, der dritte Freiheitsgrad ist die Drehbarkeit des Tellers. Dies wird bei der Achsvermessung zur Bestimmung des maximalen Einschlagwinkels sowie zur Messung des Spurdifferenzwinkels herangezogen. Dazu wird bei einem Lenkwinkel von 20° die Differenz des Winkels vom kurveninneren Rad zum Winkel des kurvenäußeren Rades ermittelt. Dies wird in beiden Lenkrichtungen durchgeführt. Auch die Spreizung und der Nachlauf werden bei einem Lenkeinschlag von 20° gemessen und berechnet. Dazu wird beim Stand der Technik der Drehteller mit einem Sensor versehen, mit dessen Hilfe der Lenkwinkel gegenüber dem Lenkwinkel 0 (Geradeausfahrt) gemessen werden kann. Der Sensor muß dabei über ein Koordinatensystem gegenüber dem Drehteller geführt und gehalten werden. Dies ist mit einem entsprechend hohen mechanischen Aufwand verbunden und durch Spiel in den Führungen kann das Meßergebnis beeinträchtigt werden.

Aufgabe der Erfindung ist es, ein Verfahren und eine Vorrichtung zum Vermessen der Achsen und Radstellungen von mehrspurigen Kraftfahrzeugen aufzuzeigen, mit denen die verschiedenen Radwinkel, insbesondere auch des Taumelschlags, ohne manuelle Eingriffe und/oder Einstellungen sowie ohne Anheben des Fahrzeugs bzw. seiner Räder mit hoher Genauigkeit kontinuierlich erfaßt werden können,

Diese Aufgabe wird erfindungsgemäß durch die in den Patentansprüchen 1 und 9 angegebenen Merkmale gelöst. Die abhängigen Ansprüche geben vorteilhafte Ausführungsformen und Weiterentwicklungen der Erfindung an.

Gemäß der Erfindung werden die Meßköpfe während des Fahrbetriebes durch die speziell ausgebildete Lageregelung so gehalten, daß die Spur- bzw.

Sturz-Winkelsensoren in ihrer Lage von der Drehbewegung des Rades nicht beeinflußt werden und ordnungsgemäß arbeiten können. Zu diesem Zweck wird den Meßköpfen eine Drehgeschwindigkeit erteilt, die von gleicher Größe wie die Drehgeschwindigkeit der Fahrzeugräder aber von entgegengerichtetem Drehsinn ist, so daß jeder Winkelkopf seine vorgegebene Lage während des gesamten Meßvorgangs genau beibehält.

Gemäß einer zweckmäßigen Ausgestaltung der Erfindung wird zur Lageregelung des Meßkopfes ein Schrittmotor verwendet und die Taumelwinkel des Sturzes bzw. der Spur werden pro Einzelschritt des Motors erfaßt und elektronisch gespeichert. Bei einer anderen Ausführung der Erfindung wird zur Lageregelung des Meßkopfes ein Gleichstrom-Motor verwendet, wobei die Rückmeldung der momentanen Istlage, die den Einzelschritten des Schrittmotors entspricht, durch einen Inkrementalgeber erfolgen kann. Als Sensorelement für die Lageregelung des Meßkopfes dient vorteilhaft ein sog. Inklinometer, der auch als Signalgeber für die Nachlauf- und die Spreizungs-Messungen Verwendung findet. Während einer Raddrehung auf einer Fahrbahn oder auch auf angetriebenen Rollenpaaren wird die Ausrichtung und Lage des jeweiligen Meßkopfes mit Hilfe der verwendeten Inklinometer erfaßt und diese Meßwerte werden in einem Rechner mit Sollwerten verglichen, wobei die Steuerung des jeweiligen Schrittmotors auf der Grundlage der erhaltenen Abweichung gegen Null erfolgt.

Bei der Vermessung eines Vierrad-Fahrzeuges werden die Taumelwinkel während einer - relativ langsamen - Fahrbewegung auf dem Werkstattboden von allen vier Meßköpfen gleichzeitig und automatisch erfaßt. Statt während einer Fahrt auf dem Werkstattboden oder auf einer anderen Fahrbahn können die Messungen auch unter Verwendung von Rollenpaaren vorgenommen werden, wobei jeweils ein Rad auf je einem angetriebenen Rollenpaar aufsteht. Auch in diesem Fall werden die Meßköpfe der zu prüfenden Räder durch die Lageregelung in ihrer vorgegebenen Meßlage gehalten. Um ggf. störende Seitenkräfte auf die Radaufhängung zu eliminieren, können die Messungen auch auf einer quer zur Fahrtrichtung beweglich gelagerten Schiebeplatte erfolgen, wobei zweckmäßig jedem Meßkopf einer Achse eine Reflex-Lichtschranke zugeordnet ist, die beim Überfahren der Schiebeplatte einen am Anfang der Schiebeplatte angeordneten Reflexstreifen detektiert und dabei die Taumelschlag-Messung startet. Wenn die Taumelschlag-Messung auf einem ansteigenden oder abfallenden Fahrbahnabschnitt vorgenommen wird, kann die dadurch bedingte Schrägstellung des Fahrzeuges durch einen Referenzsensor gemessen werden, der lösbar, z. B. magnetisch, am Kraftfahrzeug befestigt wird. Die Lageregelung berücksichtigt den vom Referenzsensor erfaßten Schrägwinkel und hält die Meßköpfe parallel zur Fahrzeug-Nickachse.

Gemäß einem weiteren Aspekt der Erfindung werden spezielle opto-elektrische Meßzellen vorgeschlagen, die für den Einsatz in der neuen Meßvorrichtung besonders geeignet sind, jedoch auch in anderen Meßvorrichtungen für Kraftfahrzeugräder verwendet werden können. Jede dieser Meßzellen enthält in einem Gehäuse eine Vielzahl von in einer Querebene angeordneten Lichtempfangselementen bzw. Zeilensensoren, welche die Lichtstrahlen aus einer zweiten zugeordneten Meßzelle empfangen, und eine oder mehrere taktweise aktivierte Lichtquellen, welche die Lichtstrahlen für die Lichtempfangselemente der zweiten Meßzelle erzeugen. In der Lichtbahn ist in vorgegebenem Abstand vor der Querebene der jeweiligen Zeilensensoren ein strichbildendes Element z. B. in Form einer Schlitzblende angeordnet, die nur einen einzigen oder auch mehrere vorzugsweise unter einem spitzen Winkel gegeneinander geneigte Schlitze aufweisen kann. Insbesondere durch Vorsehen von zwei geneigten Schlitzen in der Blende läßt sich der gesamte Meßvorgang wesentlich vereinfachen und verkürzen, weil der Spurwinkel und der Sturzwinkel mit dem gleichen Meßsensor erfaßt und berechnet werden können und auch zur Lageregelung des jeweiligen Meßkopfes nur diese Meßzellen notwendig sind. Der Anwendungsbereich dieser Meßsensoren läßt sich noch z. B. auf die Winkelmessung von Lenkradeinschlägen bzw. von Aufstands-Drehtellern dadurch erweitern, daß die Innenflächen des Sensorgehäuses zumindest teilweise verspiegelt sind. Diese Ausführung ermöglicht die Messung u. a. des Spurdifferenzwinkels, d. h. des bei einer vorgegebenen Radstellung von z. B. 20° zur Längsachse notwendigerweise vorhandenen Winkels zwischen dem kurveninneren Rad und dem kurvenäußeren Rad. Zu diesem Zweck wird das Kraftfahrzeug mit den beiden zu prüfenden Rädern auf Drehteller aufgefahren, die in der Horizontalen frei verschiebbar d. h. schwimmend gelagert und um eine Vertikalachse verdrehbar sind. Nach dem Auffahren werden die beiden Drehplatten mit den aufstehenden Fahrzeugrädern um den vorgegebenen Lenkeinschlagwinkel von z. B. 20° verdreht, wobei dieser Lenkeinschlagswinkel für das kurveninnere Fahrzeugrad bestimmt ist. Da der am Fahrzeugrad montierte Meßkopf diese Drehbewegung mitmacht, treten die von dem Meßkopf des Fahrzeugrades der anderen Achse in etwa parallel zur Fahrzeugachse ausgesendeten Lichtstrahlen unter diesem Neigungs- bzw. Lenkeinschlagwinkel in das Gehäuse ein und werden von einer der verspiegelten Seitenwände so reflektiert, daß der am hinteren Ende des Gehäuses angeordnete Zeilensensor an einer bestimmten Stelle angestrahlt wird und dem Lenkeinschlagwinkel entsprechende Ausgangssignale erzeugt. Nach Festlegen des vorgegebenen Lenkeinschlagwinkels und ggf. Fixieren der Drehteller in dieser Stellung wird durch einen entsprechenden Meßvorgang am kurvenäußeren Fahrzeugrad dessen Schrägwinkel ermittelt. Eine Subtraktion des Lenkeinschlagwinkels des kurveninneren Fahrzeugrades von diesem ermittelten - stets etwas größeren - Schrägwinkel des kurvenäußeren Fahrzeugrads ergibt den zu überprüfenden Spurdifferenzwinkel. Durch die technisch einfache Maßnahme der zumindest teilweisen Verspiegelung von zur Längsachse der Meßzelle planparallelen Seitenflächen wird somit erreicht, daß die bisher zur Bestimmung der Drehtellerlage bzw. der vorgegebenen Lenkeinschlagwinkel benötigten zusätzlichen Winkelgeber wegfallen können, wodurch sich die gesamte Meßvorrichtung weiter vereinfacht. Wenn Meßzellen mit der o. g. Doppelschlitz-Blende und seitlichen Spiegelflächen eingesetzt werden, sind für die Messung aller Radwinkel und auch für die Lageregelung der Meßköpfe keine anderen Winkeldetektoren erforderlich.

Bei opto-elektronischen Meßsensoren besteht allgemein das Problem, daß die Lichtempfangselemente nicht nur auf die Lichtstrahlen der Lichtsendeelemente sondern gleichzeitig auch auf das Umgebungslicht, z. B. Tageslicht oder Hallenbeleuchtung, ansprechen, was die Auswertung der empfangenen Lichtwerte erheblich kompliziert.

Gemäß einem weiteren Aspekt der Erfindung wird der Einfluß des Umgebungslichtes durch einen besonderen Verarbeitungsprozeß der empfangenen Lichtdaten eliminiert und gleichzeitig wird die Stärke der Ausgangssignale der eingesetzten Lichtempfangselemente erhöht, so daß genaue und aussagekräftige Messungen auch an relativ hell ausgeleuchteten Meßplätzen durchgeführt werden können. Der Einfluß des Umgebungslichts wird beseitigt durch einen ersten Meßvorgang bei abgeschalteten Lichtsendeelementen, in welchem nur das Umgebungslicht von den Lichtempfangselementen aufgenommen wird. Das sich dabei ergebende Bild wird gespeichert und von dem in einem nachfolgenden Meßvorgang mit eingeschalteten Lichtsendeelementen erhaltenen Bild subtrahiert. Zum Erhalt der ausreichend starken Meßsignale werden erfindungsgemäß die Licht-Sendeelemente in einem vorgegebenen Takt aktiviert, wobei der bei jedem Takt ausgesandte Lichtstrahl vom zugehörigen Empfangselement empfangen wird. Da der Differenzpegel zwischen zwei aufeinanderfolgenden Lichtstrahlen bei hoher Taktzahl und damit kurzen Belichtungszeiten für eine eindeutige Signalauswertung zu klein ist, werden erfindungsgemäß so viele Einzelbilder aufaddiert, bis das Signal eine ausreichende Stärke hat, um im Rechner verarbeitet werden zu können. In vorteilhafter Ausgestaltung der Erfindung werden jeweils die Lichtquellen z. B. links und vorne sowie danach rechts und hinten eingeschaltet. Dadurch kann verhindert werden, daß die Empfangselemente durch die Licht-Sendeelemente der gleichen Seite entweder direkt oder indirekt durch Reflexion beleuchtet werden. Ferner sollten die Belichtungstakte zur Netzfrequenz bzw. zu deren Periodendauer asynchron sein, um unerwünschte Lichteinflüsse von anderen künstlichen Lichtquellen herausfiltern zu können. Darüber hinaus kann vor dem strichbildenden Element, d. h. vor der Schlitzblende, ein optischer Filter angeordnet werden, dessen Durchlaßbereich der Wellenlänge der zugehörigen Lichtquelle angepaßt ist. Als Lichtempfangselemente werden ggf. mehrere Reihen von kostengünstigeren CCD-Zeilensensoren bevorzugt, die über programmierbare Logikbausteine (PLD) mit Pixel- und Bildtakten versorgt werden. Ein elektrooptisches Auswertesystem, bei welchem mehrere Differenzbilder bzw. Differenzkennlinien durch Aufaddition verstärkt werden, können auch bei Rad-Meß-Systemen ohne Lageregelung des jeweiligen Meßkopfs angewandt werden.

Zur Bestimmung von Sturz, Spreizung und Nachlauf können auch erfindungsgemäß je Meßkopf zwei um 90° zueinander versetzte Neigungssensoren vorgesehen sein. Zur Kostenminderung kann gemäß einer zweckmäßigen Ausgestaltung der Erfindung auch nur ein einziger Sensor verwendet werden, der motorisch um 90° in beide Meßstellungen verdreht wird. Durch eine Weiterdrehung um zusätzlich 90° kann vorteilhaft eine Nullpunkteinstellung bzw. -kompensation vorgenommen werden. Zweckmäßig erfolgt die Verdrehung des Sensors oder seiner Halterung mittels eines Schrittmotors, dessen Schrittzahl dem Verdrehwinkel des Sensors proportional ist.

Um Kraftfahrzeuge mit überlangen Frontspoilern problemlos vermessen zu können, sind erfindungsgemäß die an den jeweiligen Meßköpfen vorgesehenen Meßarme teleskopartig bzw. in ihrer Länge verstellbar ausgebildet und schräg zur Nickachse des Fahrzeuges ausgerichtet, so daß die an ihrem Ende befindlichen Meßelemente in dem zwischen Fahrbahn und Vorderrad befindlichen Freiraum gehalten werden. Ein weiterer Vorteil dieser Anordnung liegt darin, daß bei Ausfall der Lageregelung z. B. durch Stromunterbrechung, leere Batterie etc., die Arme aufgrund eines Bodenkontaktes ihrer freien Enden selbsttätig eingeschoben werden und dadurch Beschädigungen des Meßkopfes und auch des endseitig angeordneten Meßelementes vermieden werden. Während des Fahrbetriebes zur Ermittlung des Taumelschlages können die Meßarme eingeschoben sein, so daß auch bei kleinen Fahrzeugrädern ihre Enden nicht über den Reifenumfang hinausstehen.

In einer weiteren zweckmäßigen Ausgestaltung der Erfindung kann die Übertragung der Daten zwischen den Meßköpfen und der Steuereinrichtung über je ein Funkterminal erfolgen, so daß auch die Meßköpfe untereinander ohne direkte optische Sichtverbindung miteinander kommunizieren können. Die Datenübermittlung von einem Meßkopf zum anderen kann entweder über das Funkterminal der Steuereinrichtung oder aber zwischen den Meßköpfen direkt erfolgen, und zwar bei gleichen Frequenzen im Zeit-Multiplex-Betrieb bzw. bei Verwendung von zwei Oszillatoren im Duplex-Betrieb (gleichzeitiges Senden und Empfangen).

Weitere Besonderheiten und Vorzüge der Erfindung ergeben sich aus der folgenden Beschreibung von Ausführungsbeispielen anhand der Zeichnung. Es zeigen:

Fig. 1  schematisch das Fahrgestell eines zweispurigen Kraftfahrzeuges mit je einer Meßvorrichtung pro Fahrzeugrad und mit einer stationären Steuereinrichtung;

Fig. 2  eine an einem Fahrzeugrad montierte Meßvorrichtung in schematischer Seitenansicht;

Fig. 3a, 3b  die Halterung der Meßvorrichtung in Seitenansicht und im vertikalen Teilschnitt;

Fig. 4  schematisch zwei in den Meßköpfen verwendbare elektro-optische Meßzellen;

Fig. 5  zwei weitere in den Meßköpfen verwendbare elektro-optische Meßzellen zur Spur- und Sturzmessung;

Fig. 6  zwei weitere in den Meßköpfen verwendbare elektro-optische Meßzellen zur Spur-, Sturz- und Lenkwinkelmessung;

Fig. 7  Kennlinien der Verarbeitung von Ausgangssignalen der Meßsensoren zum Eliminieren des Umgebungslichts und zum Erhalt von verstärkten Ausgangssignalen;

Fig. 8  Kennlinien der Ausgangssignale des Meßsensors nach Fig. 5;

Fig. 9  eine Anordnung von zwei Pendel-Inklinometern in einem Meßkopf in schematischer Seitenansicht;

Fig. 10  ein in einem Meßkopf verwendbares Inklinometer mit Drehantrieb;

Fig. 11  ein Schaltbild der Steuereinheit.

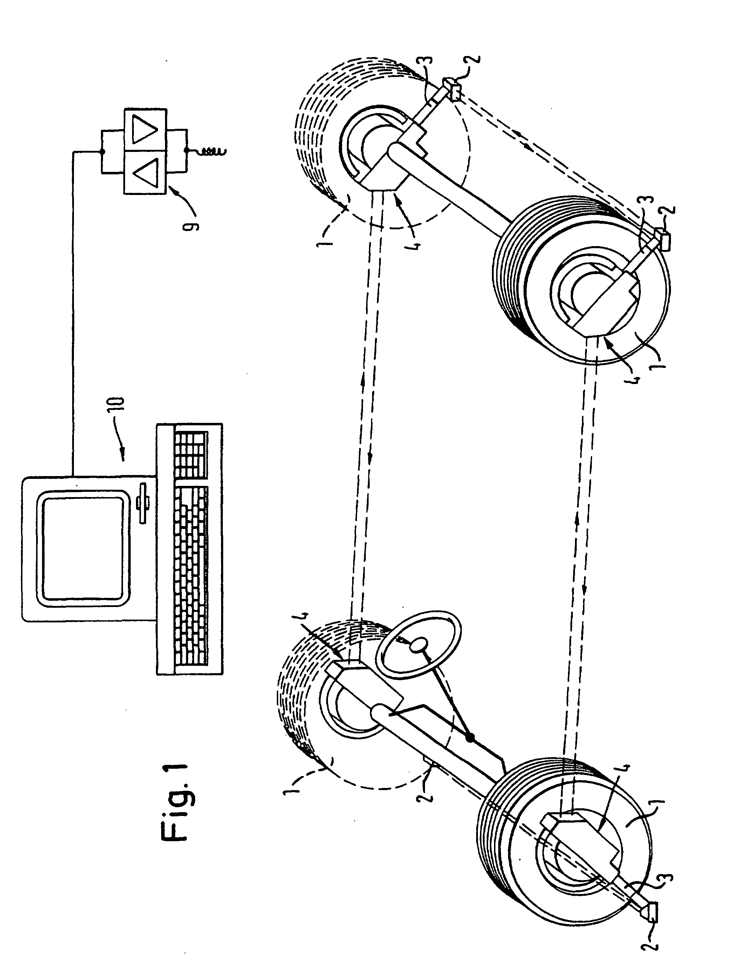

Wie aus Fig. 1 ersichtlich, sind an jedem Rad 1 eines zweiachsigen Fahrzeugs je eine Meßvorrichtung montiert, und zwar mittels einer verstellbaren Halterung, die an der Außenseite jeder Radfelge mechanisch verspannt bzw. festgeklemmt wird.

Jede in Fig. 1 bis 3 als Ausführungsbeispiel dargestellte Meßvorrichtung enthält ferner einen Meßkopf 4 mit Winkelsensoren, nämlich einem Inklinometer sowie mindestens einer elektrooptischen Meßzelle 2, die am Ende eines um etwa 45° nach unten geneigten Meßarmes 3 befestigt ist. Wie im folgenden noch im einzelnen ausgeführt wird, werden bei dieser Ausführung mit den Meßzellen 2 die horizontalen Winkel für die Spurbestimmung und mit den Inklinometern die vertikalen Winkel für die Bestimmung des Sturzes, des Taumelschlages der Spreizung und des Nachlaufes verwendet, wobei die Inklinometer auch als Meßwertgeber für die - unten beschriebene - Lageregelung des jeweiligen Meßkopfes 4 dienen.

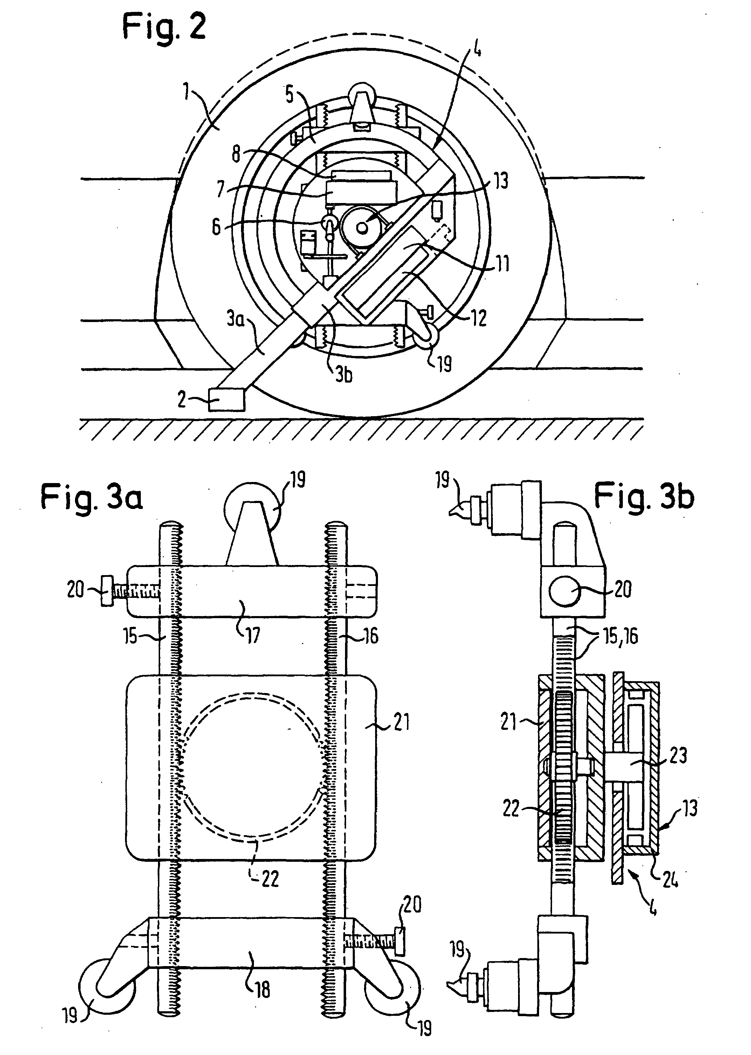

Wie insbesondere aus Fig. 2 ersichtlich, bestehen die Meßarme 3 jeweils aus zwei teleskopartig ineinander verschiebbaren Teilen 3a, 3b, wobei der nach außen weisende einschiebbare Teil 3a die Meßzelle 2 trägt und der weitere Teil 3b am Meßkopf 4 befestigt ist. Durch eine lösbare Fixiereinrichtung ggf. mit einer Meßskala können die beiden Armteile 3a, 3b so eingestellt werden, daß die Meßzelle 2 auch bei unterschiedlich großen Fahrzeugrädern 1 die in Fig. 2 dargestellte günstigste Position einnimmt.

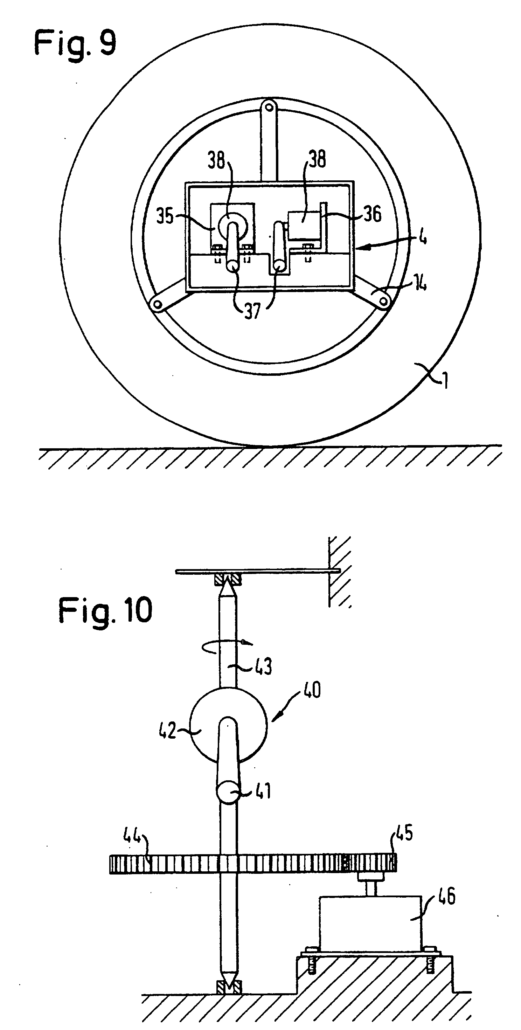

Bei der Ausführung nach Fig. 2 ist der eigentliche Meßkopf 4 von einem halbkreisförmigen Bügel 5 umgeben, der am Rohrteil 3b endseitig befestigt ist. In einem Gehäuse des Meßkopfes 4 sind ein anhand der Fig. 9, 10 im einzelnen beschriebener Pendel-Inklinometer 6, eine zweite elektrooptische Meßzelle 7, ein Funkterminal 8 für die Datenkommunikation mit der in Fig. 1 dargestellten Steuer- und Verarbeitungseinheit 10 über eine Empfangsanlage 9, sowie im unteren Teil eine Stromversorgung 11 mit zugeordneter Steuereinheit 12 angeordnet.

Die in den Fig. 3a und 3b dargestellte Halterung für einen Meßkopf enthält zwei parallele Zahnstangen 15, 16, die durch zwei Querriegel 17, 18 im Bereich ihrer Endabschnitte miteinander verbunden sind, wobei der eine Querriegel 17 ein mittleres Spannelement 19 sowie eine seitliche Fixierschraube 20 und der untere Querriegel zwei seitliche Spannelemente 19 sowie ebenfalls eine Fixierschraube 20 aufweisen. In einem Gehäuse 21 ist ein Zahnrad 22 verdrehbar gelagert, das mit den Verzahnungen der beiden Zahnstangen 15, 16 in Eingriff steht. In Flucht zur Drehachse des Zahnrades 22 ist am Gehäuse 21 eine Motorwelle 23 eines Stellmotors 13 starr befestigt, der ein Schrittmotor oder ein dynamisch zweckmäßigerer Gleichstrommotor mit zugeordnetem Inkrementalgeber sein kann und dessen Gehäuse 24 einen Teil des Meßkopfes bildet. Da die Halterung 14 an der Außenseite der jeweiligen Radfelge durch Verdrehen des Zahnrades 22 und einen Klemmangriff der drei Spannelemente 19 am Felgenrand so montiert wird, daß die Achse des Zahnrades 22 und damit auch der Motorwelle 23 mit der Radachse möglichst genau fluchtet, wird bei einer Verdrehung des Fahrzeugrades die an der Radfelge festgespannte Halterung mitgenommen. Der im Meßkopf 4 vorgesehene Inklinometer 6 erfaßt bereits kleine Winkeländerungen der Meßkopfposition, die von der Steuereinheit 12 verarbeitet und in Steuersignale für den Stellmotor 13 umgesetzt werden. Dieser Stellmotor 13 treibt den Meßkopf 4 mit einer Drehgeschwindigkeit an, die der Drehgeschwindigkeit des Fahrzeugrades genau gleich ist, jedoch entgegengesetzten Drehsinn hat. Die Aktivierungsinkremente des Stellmotors 13 werden in der Steuereinheit elektronisch gespeichert, so daß daraus die gesamte Drehbewegung des im Meßvorgang z. B. zur Bestimmung des sog. Taumelschlags verdrehten Fahrzeugrads sowie auch dessen Stellung zu jedem Zeitpunkt bestimmt werden können. Auf diese Weise wird der Meßkopf 4 in seiner dargestellten Meß- und Raumlage gehalten, und zwar unabhängig von der Größe der jeweiligen Drehgeschwindigkeit des Fahrzeugrades. Nach Fig. 3a, 3b treibt der Stellmotor 13 den Meßkopf 4 direkt, d. h. ohne Zwischenuntersetzung, an. Um kleinere Stellmotoren verwenden zu können, kann ein Getriebe (Zahnräder, Riemen o. dgl.) zwischengeschaltet sein.

In der Praxis ist es in der Regel nicht zu vermeiden, daß Fluchtungs- oder auch Versetzungs-Fehler zwischen den Achsen des Fahrzeugrades 1 und des Stellmotors 13, z. B. durch ungenaue Justierung oder auch durch Felgenschlag, auftreten. In diesem Fall entsteht bei der Drehung des Fahrzeugrades und der Gegendrehung des Meßkopfes 4 eine sich zyklisch mit der Raddrehung ändernde Abweichung, die als sog. Taumelschlag bezeichnet wird. Zur Erfassung und Kompensation dieser Abweichung bzw. des Taumelschlages kann im Meßkopf ein weiterer Inklinometer der Ausführung nach Fig. 9 vorgesehen sein, der die Winkeländerungen während eines Radumlaufes zur vertikalen Längsebene erfaßt. Statt dieses Inklinometers kann auch ein anderer Neigungssensor vorzugsweise elektrooptischer Bauart verwendet werden.

Zweckmäßig kann auch nur ein einziger Inklinometer der Ausführung nach Fig. 10 vorgesehen sein, der mittels eines Stellmotors in vorbestimmte Stellungen verdreht werden kann.

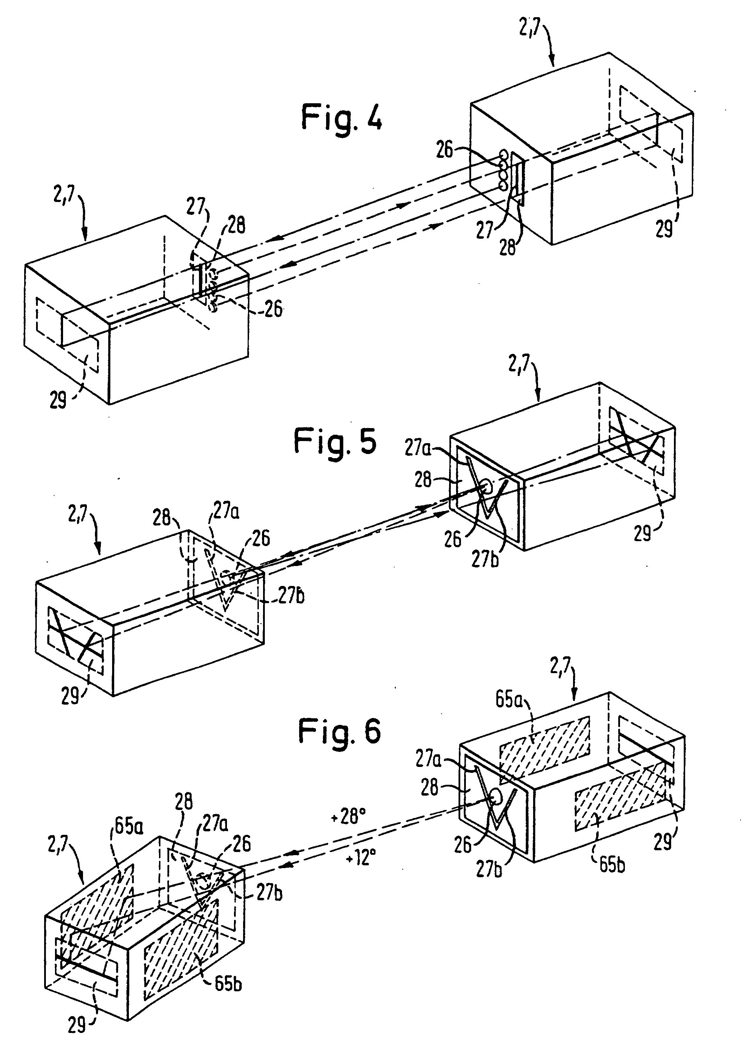

In Fig. 4 sind zwei elektrooptische Meßsensoren bzw. Meßzellen dargestellt, die bei dem erfindungsgemäß ausgebildeten Meßkopf 4 als Meßzelle 2 am freien Ende des Teleskoparmes 3 und als Meßzelle 7 im Meßkopfinneren Verwendung finden können. Jeweils eine Meßzelle gemäß Fig. 4 ist im Meßkopf eines Fahrzeugrades und die zweite Meßzelle ist im Meßkopf eines anderen Fahrzeugrades angeordnet, wie dies aus den in Strichlinien dargestellten Strahlengängen in Fig. 1 hervorgeht. Jede Meßzelle enthält je ein Lichtsendeelement als gerichtete Lichtquelle 26 in Form z. B. eines LEDs, eines Lasers od. dgl., dessen durch Pfeile angedeutete Lichtstrahlen in Richtung einer im vorderen Endteil der anderen Meßzelle angeordneten Schlitzblende 27 ausgesendet werden. Jeder Schlitzblende 27 kann ein Filter 28 zugeordnet sein, das nur Licht einer vorbestimmten Wellenlänge durchläßt. Ferner ist in jeder Meßzelle ein Lichtempfangselement in Form von CCD-Zeilensensoren 29 vorgesehen, dessen Einzelelemente von den aus der jeweiligen Schlitzblende 27 und dem Filter 28 austretenden streifenförmigen Lichtstrahl aktiviert werden. Zweckmäßig erfolgt die Aktivierung der LEDs 26 taktweise, um zumindest einen Anteil des störenden Umgebungslichtes herausfiltern zu können. Bei einer von der dargestellten Relativposition abweichenden Schräglage des einen oder anderen Meßsensors wandert die in Fig. 4 mittig gezeigte Lichtmarke zur einen oder anderen Seite, wobei der Abstand der Lichtmarke von der Mittellinie proportional zur relativen Schräglage der beiden Meßsensoren ist und die Grundlage für die Verarbeitung und Anzeige der Meßdaten bildet.

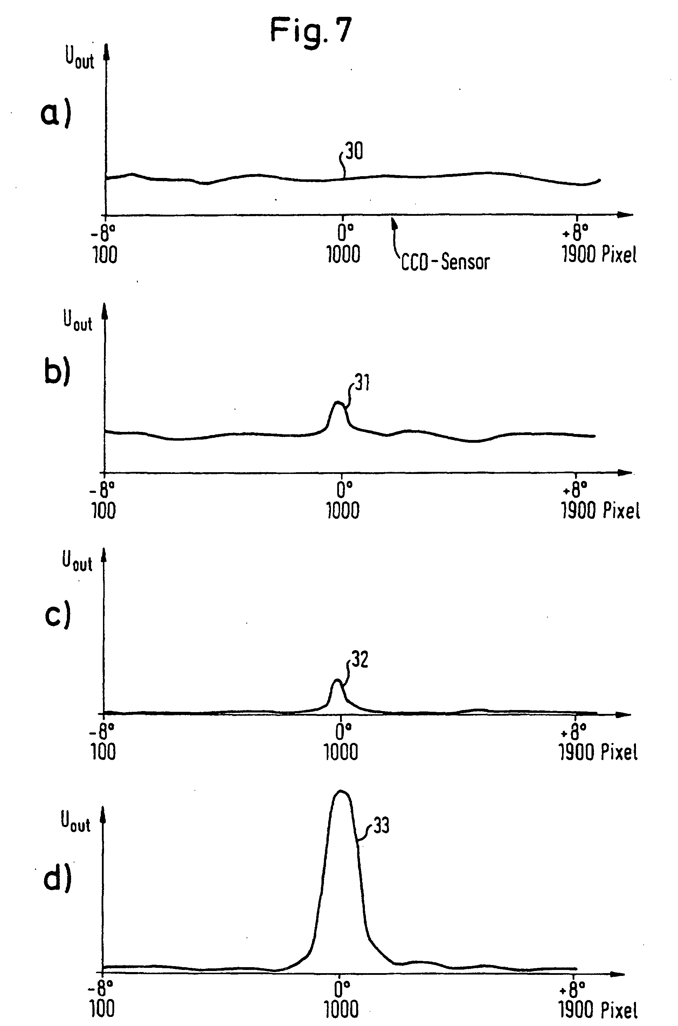

Da bei sehr heller Umgebung, z. B. bei Tageslicht, die Dämpfung des Umgebungslichts durch die taktweise Aktivierung der Lichtsendeelemente 26 allein nicht ausreicht und Übersteuerungen der Lichtempfangselemente 29 auftreten können, werden erfindungsgemäß die durch Fremdlicht verursachten Störeinflüsse in der in Fig. 7 dargestellten Weise eliminiert. Vor einem Meßvorgang wird der Umgebungslicht-Pegel im Empfangselement, d. h. im CCD-Zeilensensor 29, bei inaktivem Lichtsendeelement 26 gemessen, was die in Fig. 7a dargestellte Basiskennlinie 30 ergibt. Daraufhin erfolgt durch Aktivieren des Lichtsendeelements 26 eine Winkelmessung zum Erhalt der Kennlinie 31 gemäß Fig. 7b, von der die Basiskennlinie 30 der Fig. 7a subtrahiert wird, um die Kennlinie 32 gemäß Fig. 7c zu erhalten. Wie ersichtlich, hat diese Kennlinie lediglich in einem Bereich von hier 0° einen plötzlich erhöhten Signalpegel U. Die Werte von nachfolgend erfaßten Kennlinien bzw. Differenzbildern werden nun so lange aufaddiert, bis die Kennlinie 33 gemäß Fig. 7d mit. einem ausreichend hohen Signalpegel im 0°-Bereich erhalten worden ist. Damit haben die dem Rechner zugeführten Ausgangssignale eine ausreichend hohe Spannung für die weitere Verarbeitung. Bei einer seitlichen Verschiebung des Lichtstriches der Fig. 4 erfolgt eine entsprechende Seitenverschiebung des erhöhten Signalpegels der Fig. 7d.

Die eingesetzten CCD-Zeilensensoren werden von einem programmierbaren Logikbaustein (PLD) mit Pixel- und Bildtakt versorgt. Pro Pixeltakt steht am Ausgang des CCD-Zeilensensors eine Spannung oder ein Strom zur Verfügung, der dem Belichtungszustand des jeweiligen Lichtempfangselementes proportional ist.

Die in Fig. 5 dargestellten Meßsensoren bzw. Meßzellen 2; 7 entsprechen in ihrem konstruktiven Aufbau im wesentlichen der Meßzellen-Ausführung nach Fig. 4, was durch die Verwendung gleicher Bezugszeichen für einander entsprechende Bauteile zum Ausdruck kommt. Die Meßzelle 2; 7 nach Fig. 5 unterscheidet sich jedoch in funktionaler Hinsicht erheblich von der Ausführung nach Fig. 4, weil sie auf einfache Weise die Messung der Sturzwinkel und auch der Spurwinkel ohne weitere Bauteile ermöglicht. Zu diesem Zweck weist jede Blende zwei strichbildende Elemente in Form von Schlitzen 27a, 27b auf, die bei der dargestellten Ausführung V-förmig angeordnet sind. Zwischen den beiden Schlitzen 27a und 27b ist ein Lichterzeuger vorgesehen, der aus einem oder auch aus mehreren Lichtsendeelementen 26 gemäß Fig. 4 bestehen kann und die getakteten bzw. gepulsten gerichteten Lichtstrahlen zum Beleuchten des zugehörigen anderen Meßsensors erzeugt. Aufgrund der schrägen Lage der beiden Blendenschlitze 27a und 27b ergeben sich die beiden V-förmigen Projektionsbilder an der Rückwand des Meßzellengehäuses, an welcher ein zeilenförmiges Lichtempfangselement 29 angebracht ist.

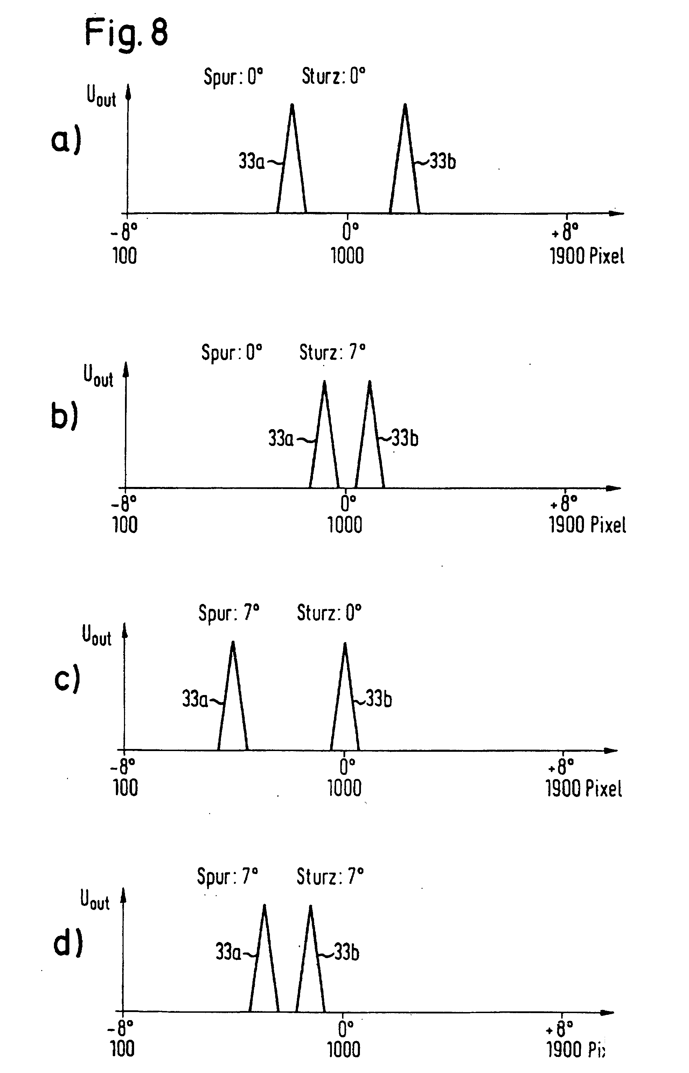

Die Funktionsweise der in Fig. 5 dargestellten Meßzellen 2; 7 wird im folgenden anhand der Kurvenbilder der Fig. 8 beschrieben, wobei auch in diesem Falle die vorstehend mit Bezug auf Fig. 7 erläuterte Unterdrückung der Umgebungslicht-Einflüsse praktiziert wird, so daß die beiden schematisierten Spitzkegel 33a, 33b der Fig. 8a bis 8d dem erhöhten Signalpegel der Kurve 33 in Fig. 7d entsprechen. Jeder der beiden Spitzkegel 33a und 33b wird von jeweils einem der beiden Blendenschlitze 27a und 27b erzeugt. Wenn der Spurwinkel und auch der Sturzwinkel Null ° sind, ergibt sich die in Fig. 5 gezeigte Belichtung der Lichtempfangselemente 29 und die in Fig. 8a dargestellte Lage der beiden Spitzkegel 33a, 33b. Werden die beiden Meßsensoren 2; 7 relativ in der Horizontalebene gegeneinander verschwenkt, was einem Spurwinkel entsprechen würde, wandert das V-förmige Projektionsbild in Fig. 5 nach links oder rechts, wobei die beiden Schnittpunkte der V-Schenkel mit der Sensorzeile 29 in ihrem Abstand unverändert bleiben und sich dadurch die in Fig. 8c dargestellte Lage der Spitzkegel 33a, 33b ergibt. Bei einer rein vertikalen Relativbewegung der Meßsensoren 2; 7, was einem Sturzwinkel entspricht, wird das V-förmige Projektionsbild in Fig. 5 nach oben oder unten verschoben, was zu einer Abstandsänderung der Schnittpunkte Bild/Sensorzeile ohne seitliche Verschiebung führt. Die Lage der beiden Spitzkegel 33a, 33b für diesen Fall ist in Fig. 8b gezeigt. Aus der seitlichen Verschiebung und gleichzeitigen Abstandsänderung der beiden Spitzkegel 33a, 33b gemäß der Darstellung in Fig. 8d ergibt sich, daß mit den Meßsensoren gemäß Fig. 5 erstmals der Spurwinkel und auch der Sturzwinkel gleichzeitig gemessen werden können, was eine erhebliche Vereinfachung und Beschleunigung des gesamten Meßvorganges bedeutet. Selbstverständlich können auch Winkel mit gemeinsam oder wechselweise negativen Werten gemessen werden.

Durch den Winkel der V-förmigen Blendenschlitze 27a, 27b, bzw. deren Höhe, kann in dem Verhältnis zum Sensorabstand der Meßbereich und damit die Sensorauflösung bestimmt werden. Vorzugsweise wird eine Lichtempfangszeile mit 2048 oder 5000 Pixel verwendet und die V-Schlitzblende so gewählt, daß je die Hälfte des Sensorbereichs für die Spur-bzw. Sturzmessung mit jeweils +/- 8° zur Verfügung steht. Durch die geeignete Wahl des Winkels kann jedoch auch der Sensoranteil ungleich sein. Wird z. B. für die Spur eine höhere Auflösung gewünscht, so kann dies auf Kosten der Sturzauflösung geschehen. Zu diesem Zweck wird z. B. der V-Winkel der Blende verkleinert, wodurch die in Fig. 8a gezeigten Signalspitzen enger zusammenrükken. Dieser zusätzliche Bereich des Sensors kann entweder zu einem höheren Meßbereich, z. B. +/- 10°, genutzt werden, oder es kann durch eine Vergrößerung des Abstandes von der Blende zum Sensor bei gleichem Meßbereich eine höhere Auflösung erreicht werden. Schließlich können mit diesen Meßzellen auch die Meßdaten für die Lagesteuerung der Meßköpfe 4 bei drehenden Fahrzeugrädern z..B. zur Bestimmung des Taumelschlags erhalten werden, und zwar durch den Abstand der Spitzenkegel 33a, 33b.

Neben der Erfassung der Spur- und Sturzwinkel gehören zu einer Rad- und Achsvermessung von Kraftfahrzeug-Rädern u. a. auch die Bestimmung des maximalen Lenkeinschlagswinkels der gelenkten Räder, des Spurdifferenzwinkels, der Spreizung und des Nachlaufs. Zur Messung der letztgenannten Winkel sind Aufstandsplatten für die zu vermessenden Räder erforderlich, die in der Horizontalebene frei verschiebbar und verdrehbar gelagert sind. Die Bestimmung des Spurdifferenzwinkels der Spreizung und des Nachlaufs erfolgt jeweils bei einem Lenkeinschlagswinkel von ± 20°, der durch eine Verdrehung der Aufstandsplatte eingestellt wird.

Die Messung bzw. Einstellung des Lenkeinschlagswinkels kann erfindungsgemäß auf einfache Weise durch Verwendung der in Fig. 6 dargestellten Meßsensoren erfolgen, die in ihrem konstruktiven Aufbau weitgehend den Ausführungen nach Fig. 4 bzw. 5 entsprechen. Wie in Fig. 6 dargestellt, sind an den Seitenwänden des jeweiligen Sensorgehäuses Verspiegelungen 65 vorgesehen, welche die einfallenden - gestrichelt gezeigten - Lichtstrahlen innerhalb eines vorbestimmten horizontalen Neigungsbereichs von z. B. 12 bis 28° so reflektieren, daß in der Lichtempfangszeile 29 Bildsignale erzeugt werden. Auf diese Weise können die Lenkeinschlagswinkel, d. h. die Radwinkel, bei einem Lenkeinschlag von z. B. 20° direkt erfaßt werden. Durch die planparallelen Verspiegelungen 65a, 65b an den beiden Gehäuseseitenwänden werden die in einem Winkelbereich von z. B. ± 12 bis 28° auftreffenden Lichtstrahlen reflektiert und von den entsprechenden Lichtempfangselementen in der Sensorzeile 29 empfangen. Die Ausführung nach Fig. 6 funktioniert in dem Winkelbereich von z.B. ± 8° wie der Meßsensor nach Fig. 5 zur Ermittlung der Spurwinkel und der Sturzwinkel und ermöglicht zusätzlich die o. g. Einstellung von Lenkeinschlagwinkeln sowie die Bestimmung von Nachlauf, Spreizung usw. Die in Fig. 6 dargestellte horizontale Schräglage der beiden Meßsensoren 2; 7 entspricht einem vorgewählten maximalen Lenkeinschlagwinkel von 28°. Es versteht sich von selbst, daß bei dem vorgewählten minimalen Lenkeinschlagwinkel von 12° - dessen Lichtstrahlen durch die Strichlinie + 12° ebenfalls eingezeichnet sind - die horizontale Schräglage der beiden Meßsensoren 2; 7 entsprechend kleiner ist.

Mit den in Fig. 6 dargestellten Meßsensoren 2; 7 können mit Hilfe je einer einzigen hochauflösenden linearen Empfangszeile 29 (CCD-Sensor) alle für die Fahrgeometrie eines Kraftfahrzeugs wichtigen Winkel erfaßt werden. Durch die Verwendung der Blende mit den beiden V-förmig angeordneten Blendenschlitzen 27a und 27b wird der Spurwinkel und rechtwinklig zu diesem der Sturzwinkel gemessen. Bei einem Lenkeinschlagwinkel von ± 20° werden über die jeweils wirksame Spiegelfläche 65a bzw. 65b das jeweilige Spursignal ermittelt und aus der Differenz der beiden Spursignale der Spurdifferenzwinkel gebildet. Aus den um 90° versetzten Sturzsignalen bei diesem Lenkeinschlagwinkel von ± 20° werden der Nachlauf und die Spreizung wie folgt berechnet:

$$\tau = \tan^{-1} \frac{\sin \gamma_{Ni} - \sin \gamma_{Na}}{\sin \delta a - \sin \delta i}$$

$$\sigma = \tan^{-1} \frac{\sin \gamma_{Si} - \sin \gamma_{Sa}}{\sin \delta a - \sin \delta i}$$

$\tau$ = Nachlauf
$\sigma$ = Spreizung
$\delta$ = Lenkwinkel
$\gamma_N$ = Winkel Nachlaufgeber
$\gamma_S$ = Winkel Spreizungsgeber
i, a = Index für i = kurveninnen, a = kurvenaußen

Die oben genannten Nachlaufgeber und Spreizungsgeber werden von den in Fig. 2 gezeigten Meßsensoren 7, die den Winkel zwischen Vorderachse und Hinterachse messen, sowie durch die in den Fig. 1 und 2 gezeigten Meßsensoren 2 (Querspursensoren) gebildet.

Die vorstehend beschriebenen elektrooptischen Meßsensoren bzw. Meßzellen 2; 7 und auch das Funktionsprinzip zur Streulicht-Unterdrückung gemäß Fig. 7 können auch bei anderen Vorrichtungen zum Vermessen von Fahrzeugrädern bzw. -achsen Verwendung finden.

Bei dem in Fig. 9 dargestellten Meßkopf 4, der mittels einer Dreistreben-Halterung 14 außen an einer Radfelge fest montiert ist, sind zwei Inklinometer 35, 36 um 90° gegeneinander versetzt angeordnet. Jedes Inklinometer 35, 36 besitzt ein um eine horizontale Achse frei schwenkbar gelagertes Gewichtspendel 37 und einen am Meßkopf fest montierten Winkelgeber 38, der über nicht dargestellte Leitungen mit der in Fig. 2 dargestellten Steuerplatine 12 elektrisch verbunden ist. Bei dieser Ausführung liefert der Inklinometer 35 die Meßsignale für die Lageregelung des Meßkopfes 4, wohingegen der Inklinometer 36 zur Messung z. B. des Sturzwinkels und auch des Taumelschlages dient.

Bei dem in Fig. 10 schematisch dargestellten Meßkopf, der ebenfalls z. B. bei der Vorrichtung nach Fig. 1 und 2 eingesetzt werden kann, wird nur ein einziger Inklinometer 40 mit einem Gewichtspendel 41 und einem Winkelgeber 42 verwendet, der an einer spitzengelagerten Achse 43 befestigt ist. Auf dieser Drehachse 43 sitzt ein Zahnrad 44, das mit einem von einem Gleichstrom- oder Schrittmotor 46 angetriebenen Ritzel 45 in Eingriff steht. Mit Hilfe dieses Motors 46 kann das Inklinometer 40 in vorgegebene Positionen, z. B. um 90° und um 180°, verdreht werden, so daß mit nur einem Inklinometer 40 die Werte für die Lageregelung ebenso wie für die Sturz- und die Taumelschlag-Erfassung erhalten werden können. Darüber hinaus ergibt sich durch eine Verdrehung des Inklinometers 40 um 180° auch eine Möglichkeit zur Nullpunkteinstellung. Wenn z. B. der Sturz + 5° beträgt und der Inklinometer 40 einen Nullpunktfehler von + 1° aufweist, steht am Ausgang des Inklinometers ein Signal von + 6° an. Nach einer Verdrehung des Inklinometers 40 um 180° steht am Ausgang ein Signal von + 4° an. Der Mittelwert beider Messungen ist das vom Fehler befreite Sturzsignal von + 5°. Statt der in Fig. 9, 10 dargestellten Inklinometer mit Pendelgewichten 37, 41 können auch andere Inklinometertypen, insbesondere elektrooptische, verwendet werden.

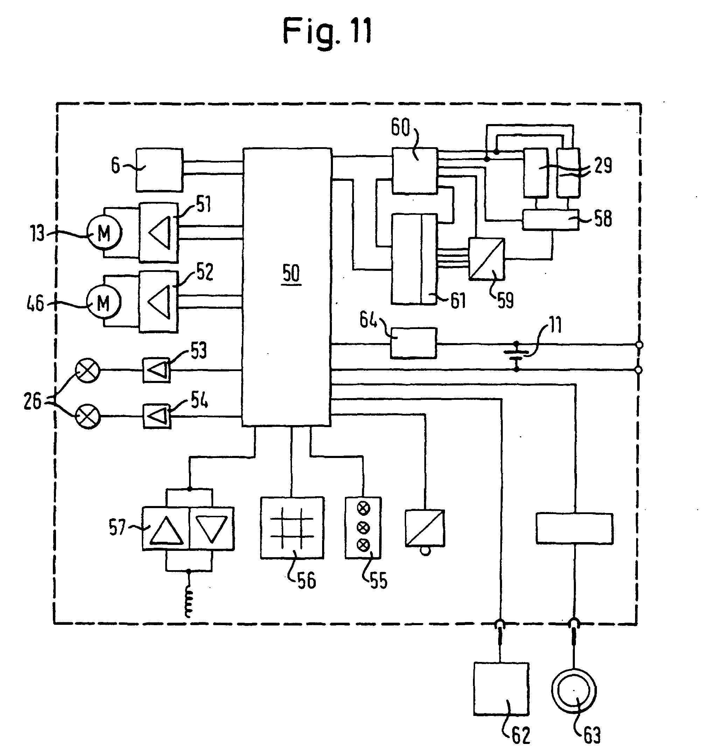

Die in Fig. 11 dargestellte Steuerschaltung ist Bestandteil der Steuerplatine 12 in Fig. 2. Der Gleichstrom- oder Schrittmotor 13 für die Lageregelung und auch der Gleichstrom- oder Schrittmotor 46 (Fig. 10) für die Verdrehung des Inklinometers 40 werden über je einen Treiber 51, 52 .von einem Mikroprozessor 50 angesteuert. Ebenso werden die Lichtquellen 26 der Meßzellen 2, 7 über Takt-Schalter 53, 54 vom Mikroprozessor 50 angesteuert. Die Ausgangssignale der elektrooptischen Meßsensoren nach Fig. 4 bis 6 bzw. der Inklinometer 6 bzw. 35, 36 bzw. 40 nach Fig. 9 und 10 werden dem Mikroprozessor 50 zugeführt. Ferner enthält die Schaltungsanordnung eine mit dem Mikroprozessor 50 verbundene Statusanzeige 55 des Meßkopfes, eine Tastatur 56 für manuellen Betrieb sowie ein Funkterminal 57, über das die Ausgangssignale des Mikroprozessors 50 an die Steuereinheit 10 (Fig. 1) übertragen werden können. Die Zeilensensoren 29 der beiden Meßzellen 2 und 7 jedes Meßkopfes 4 sind über einen Multiplexer 58 zur Auswahl der jeweiligen CCD-Sensoren mit einem Analog/Digital-Wandler 59 sowie mit einem programmierbaren Logikbaustein (PLD) 60 verbunden, welcher die CCD-Sensoren 29, den Multiplexer 58, den A/D-Wandler 59 sowie Video-RAMs 61 steuert. Der PLD 60 sowie der aus einem seriellen Teil und einem parallelen Teil bestehende Video-RAM 61 sind über einen Datenbus mit dem Mikroprozessor 50 verbunden. Zwischen dem Akkumulator 11 und dem Mikroprozessor 50 ist ein Spannungsregler 62 eingeschaltet. Ferner können mit dem Mikroprozessor 50 ein Referenz-Inklinometer 63 sowie ggf. ein an einem schwimmend gelagerten Drehteller angeordneter Drehwinkel-Detektor 64 zur Messung eines Lenkeinschlags berührungsfrei verbunden sein.

Die Erfindung ist nicht auf die dargestellten Ausführungsbeispiele beschränkt. So können Bauelemente und auch Baugruppen gesondert, einzeln oder in anderer als der beschriebenen Kombination in Winkelmeßvorrichtungen eingesetzt werden. Insbesondere können bei Verwendung der elektrooptischen Meßzellen der Fig. 5 und 6 die mechanisch relativ anfälligen Pendel-Inklinometer sowie ggf. auch Drehteller-Winkelgeber entfallen. Ferner kann ein mit der erfindungsgemäßen Meßvorrichtung ausgerüsteter Prüfstand quer zur Fahrtrichtung verschiebbare Schiebeplatten und mindestens eine vom auffahrenden Kraftfahrzeug aktivierbare Lichtschranke aufweisen, nach deren Aktivierung die Messungen beim Überfahren der Schiebeplatten durchgeführt werden.

Gegenstand der Erfindung sind somit Verfahren und Vorrichtungen zum Vermessen der Rad- und Achsstellungen von zweispurigen Kraftfahrzeugen, bei denen die relevanten Radwinkel, wie Spur, Sturz, Taumelschlag usw., mittels an den Felgen der Fahrzeugräder montierter Meßköpfe erfaßt und über eine elektronische Verarbeitungseinrichtung für die Meßdaten ausgewertet und angezeigt werden. Um die Meßvorgänge, insbesondere die Erfassung des Taumelschlags, auch bei einem auf der Fahrbahn oder Rollenpaaren aufstehenden Fahrzeug durchführen zu können, wird gemäß der Erfindung der Meßkopf jedes Fahrzeugrades bei drehangetriebenen Fahrzeugrädern des aufstehenden Kraftfahrzeugs in seiner vorgegebenen Meß- und Raumlage gehalten, und zwar durch eine drehbare Lagerung des Meßkopfes und einen Drehantrieb mit der gleichen aber gegensinnigen Drehgeschwindigkeit wie das zugeordnete Fahrzeugrad.

Des weiteren wird ein Sturz- und Spreizungssensor vorgeschlagen, der drehbar gelagert ist und durch eine Verdrehung um beispielsweise 90° den Sturz bzw. Nachlauf und Spreizung mit einem einzigen Sensor messen kann. Des weiteren wird durch eine zusätzliche Drehung um weitere 180° eine Kompensation des sensoreigenen Offset-Fehlers ermöglicht.

Ein weiterer Gegenstand der Erfindung ist, daß anstatt der Sturzmessung über Inklinometer ein einziger hochauflösender, linearer CCD-Sensor zur Anwendung kommt, der durch eine V-förmig gestaltete Schlitzblende so belichtet wird, daß aus dem Sensorsignal sowohl der Spurwinkel als auch der Sturzwinkel errechnet werden können.

Eine weitere Ausgestaltung der Erfindung ist, daß Teile der Seitenwände des Sensorgehäuses derart verspiegelt sind, daß bei einer relativen Schräglage zweier Meßköpfe von + oder - 20° der durch die Schlitzblende fallende Lichtspalt auf der gleichen Stelle des Sensorelements auftrifft wie bei Null °. Durch diese Möglichkeit kann auf den Einsatz eines Winkelgebers in der dem Rad dienenden Aufstandsteller verzichtet werden. Zweckmäßig sollte das Verhältnis des Abstands a zwischen der Blende 27 und dem Meßsensor 29 jeder Meßzelle 2, 7 zu dem Abstand b von der Meßzellenmitte zu der verspiegelten Fläche 65a bzw. 65b so gewählt werden, daß die vom Fahrzeughersteller geforderten Winkelpaare vorzugsweise 20 oder 10° betragen. Der gewünschte Winkel (tan β) ergibt sich hierbei zu $\tan \beta = 2 \times b : a$.

**Patentansprüche**

1. Verfahren zum Vermessen der Radstellungen von zweispurigen Kraftfahrzeugen, bei denen die relevanten Radwinkel, wie Spur, Sturz, Nachlauf, Taumelschlag od. dgl., mittels an den Felgen der Fahrzeugräder (1) montierter Meßköpfe (4) erfaßt und über eine Verarbeitungseinrichtung (10, 12) für die Meßdaten ausgewertet und angezeigt werden, wobei die Meßköpfe um die Verlängerung der Drehachse des jeweils zugehörigen Fahrzeugrades schwenkbar sind, **dadurch gekennzeichnet,** **daß** bei drehangetriebenen Rädern des Kraftfahrzeugs die Meßköpfe (4) über eine durch die Verarbeitungseinrichtung (10, 12) gesteuerte und über eine Einrichtung (13) eingestellte Lageregelung in ihrer vorgegebenen Meßlage gehalten werden.

2. Verfahren nach Anspruch 1, **dadurch gekennzeichnet,** **daß** die einzelnen Meßköpfe (4) während eines Meßvorganges mit der Drehgeschwindigkeit der ihnen zugeordneten Fahrzeugräder aber in entgegengesetzter Drehrichtung angetrieben werden.

3. Verfahren nach Anspruch 1 oder 2, **dadurch gekennzeichnet,** **daß** während der Drehbewegung des jeweiligen Fahrzeugrades der Ist-Wert der Lage des Meßkopfes (4) erfaßt und mit entsprechenden Soll-Werten verglichen wird, und daß die gegensinnige Meßkopfverdrehung so gesteuert wird, daß die Istwert-Sollwert-Abweichung nahe Null bleibt.

4. Verfahren nach Anspruch 1 bis 3, **dadurch gekennzeichnet,** **daß** die Messungen an dem mit vorgegebener Geschwindigkeit auf der Fahrbahn rollenden Kraftfahrzeug durchgeführt werden.

5. Verfahren nach Anspruch 1 bis 3, **dadurch gekennzeichnet,** **daß** die Messungen auf drehangetriebenen Rollenpaaren durchgeführt werden.

6. Verfahren nach Anspruch 1 bis 3, **dadurch gekennzeichnet,** **daß** die Messungen beim Überfahren einer quer zur Fahrtrichtung verschiebbaren Schiebeplatte durchgeführt werden, wobei eine Aktivierung des Meßvorganges durch Überfahren einer Lichtschranke erfolgt.

7. Verfahren nach einem der Ansprüche 1 bis 6, **dadurch gekennzeichnet,** **daß** die Meßdaten aus den Meßköpfen mittels Funkübertragung einer gesonderten Verarbeitungs- und Anzeigeeinrichtung zugeführt werden.

8. Verfahren nach einem der Ansprüche 1 bis 7, **dadurch gekennzeichnet,** **daß** die Vermessung der Stellung eines Fahrzeugrades unter Verwendung von zwei lagegeregelten Meßköpfen (4) elektrooptisch durchgeführt wird, wobei ein Zeilendetektor (29) des einen Meßkopfes (4) intermittierend von einer Lichtquelle (26) des anderen, gegenüberliegenden Meßkopfes beleuchtet wird, die Lichtintensität in einem ersten Meßvorgang bei abgeschalteter Lichtquelle und anschließend in einem zweiten Meßvorgang bei aktivierter Lichtquelle gemessen wird, die bei abgeschalteter Lichtquelle erhaltenen Meßdaten von den bei eingeschalteter Lichtquelle erhaltenen Meßdaten subtrahiert werden und die bei aus- und eingeschalteter Lichtquelle erhaltenen Differenzbilder so lange aufaddiert werden, bis das Nutzsignal eine ausreichende Stärke für die Weiterverarbeitung hat.

9. Vorrichtung zum Vermessen der Radstellungen eines zweispurigen Kraftfahrzeuges mit

   - einer an jedem Fahrzeugrad (1) montierten Halterung (18 bis 22) mit einem um die Verlängerung der Radachse verschwenkbaren Meßkopf (4), der Winkelsensoren (2, 7) zum Erfassen der Radstellungen aufweist, und
   - einer Einrichtung (10, 12) zum Auswerten und Anzeigen der Meßdaten, **dadurch gekennzeichnet, daß**
   - dem Meßkopf (4) eine durch die Einrichtung (10, 12) angesteuerte Einrichtung (13) zur Lageregelung zugeordnet ist, die seine Meßlage während eines Meßvorganges bei drehendem Fahrzeugrad (1) aufrechterhält.

10. Vorrichtung nach Anspruch 9, **dadurch gekennzeichnet,** **daß** die Einrichtung (13) zur Lageregelung des Meßkopfes (4) einen Antrieb (13) enthält, der den Meßkopf (4) gegensinnig zur Drehbewegung des Fahrzeugrades (1) mit der gleichen Drehzahl wie das Fahrzeugrad antreibt, sowie Neigungssensoren (6) in Form von Inklinometern, elektrooptische Winkelsensoren (7, 2) und eine Steuereinheit (12).

11. Vorrichtung nach Anspruch 10, **dadurch gekennzeichnet,** **daß** der Antrieb für den Meßkopf ein Schrittmotor (13) oder ein Gleichstrommotor mit einem Inkrementgeber ist.

12. Vorrichtung nach Anspruch 10, **dadurch gekennzeichnet,** **daß** die der Steuereinheit (12) zugehörigen Neigungssensoren (6) um eine Achse frei bewegliche Pendel aufweisen.

**13.** Vorrichtung nach Anspruch 10, **dadurch gekennzeichnet, daß** mehrere Meßköpfe (4) vorgesehen sind, wobei jeder Meßkopf (4) zwei Winkelsensoren (2, 7) enthält, von denen jeder aus einer Lichtquelle (26), einer Blende (27) und einer Sensorzeile (29) besteht, wobei ein Winkelsensor (2, 7) des einen Meßkopfes (4) mit einem zweiten Winkelsensor (2, 7) in einem ihm gegenüberliegenden Meßkopf (4) zusammenwirkt und die Lichtquelle (26) des einen Winkelsensors (2, 7) auf die Sensorzeile (29) des zweiten Winkelsensors (2, 7) eine Lichtmarke projiziert.

**14.** Vorrichtung nach einem der Ansprüche 9 bis 13, **dadurch gekennzeichnet, daß** den oder jeder Meßkopf (4) nur einen einzigen motorisch schwenkbaren Neigungssensor (42) aufweist, der eine Meßstellung zur Nachlauf- und Spreizungsmessung sowie eine jeweils um weitere 180° versetzte Meßstellung zur Offsetkompensation der vorhergehenden Meßstellungen enthält.

**15.** Vorrichtung nach Anspruch 14, **dadurch gekennzeichnet, daß** der Schwenkmotor (46) des Neigungssensors (42) ein Schrittmotor ist, dessen Schrittanzahl mit dem Drehwinkel des Sensors proportional ist.

**16.** Vorrichtung nach Anspruch 14, **dadurch gekennzeichnet, daß** der Motor (46) des Neigungssensors (42) ein Gleichstromgetriebemotor mit einem angeflanschten Potentiometer zur Bestimmung der Sensorlage ist, wobei die vom Rechner (10, 12) ermittelte Sollposition über einen nachgeschalteten Servoverstärker eingestellt wird.

**17.** Vorrichtung nach einem der Ansprüche 9 bis 14, **dadurch gekennzeichnet, daß** ein Bauteil des Stellmotors (13) für den oder jeder Meßkopf (4) mit einem achszentrierten Zapfen (23) der Halterung (14) und das andere Motorbauteil (24) mit dem Meßkopf (4) verbunden ist.

**18.** Vorrichtung nach Anspruch 9 bis 14, **dadurch gekennzeichnet, daß** der oder jeder Meßkopf (4) über ein Umkehrgetriebe mit der Halterung gekuppelt ist.

**19.** Vorrichtung nach einem der Ansprüche 9 bis 18, **dadurch gekennzeichnet, daß** am oder an jeder Meßkopf (4) ein in seiner Länge verstellbarer Meßarm (3) in einer vorgegebenen Schräglage zur Horizontalen montiert ist, der an seinem freien Ende einen elektrooptischen Sensor (2) aufweist und in vorgegebenen Ausziehstellungen fixierbar ist.

**20.** Vorrichtung nach einem der Ansprüche 9 bis 19, wobei den oder jeder Meßkopf (4) zwei elektrooptische Meßzellen (2; 7) mit je einer Lichtquelle (26), einer Blende (27) und einen Zeilensensor (29) sowie eine Einrichtung (12) zur Aufbereitung bzw. Verarbeitung der Meßsignale aufweist, **dadurch gekennzeichnet, daß** die Schlitzblende (27) zumindest zwei Schlitze (27a, 27b) in einer vorgegebenen örtlichen Zuordnung zur Erzeugung von zumindest zwei entsprechenden Lichtmarken auf dem Zeilensensor (29) aufweist, wobei die Lage der Lichtmarken in einem Bezugssystem dem Spurwinkel und der Abstand beider Lichtmarken dem Sturzwinkel entspricht.

**21.** Vorrichtung nach Anspruch 20, **dadurch gekennzeichnet, daß** die Blende (27) zwei V-förmig angeordnete Blendenschlitze (27a, 27b) aufweist.

**22.** Vorrichtung nach Anspruch 20, **dadurch gekennzeichnet, daß** die V-Form bei dem Blendenschlitz so ausgeführt ist, daß mit einem linearen CCD-Sensor (29) sowohl 8° Spur als auch 8° Sturzwinkel gemessen werden können, und daß zwischen den beiden V-Schenkeln die Lichtquelle (26) angeordnet ist.

**23.** Vorrichtung nach Anspruch 20, **dadurch gekennzeichnet, daß** die Meßzelle (2; 7) zwischen der Blende (27) und dem Sensorelement (29) seitliche Spiegelflächen (65a, 65b) aufweist.

**24.** Vorrichtung nach Anspruch 23, **dadurch gekennzeichnet, daß** die Meßzelle (2; 7) ein Gehäuse aufweist, an dessen Seitenwänden die planparallelen verspiegelten Flächen (65a, 65b) vorgesehen sind.

**25.** Vorrichtung nach Anspruch 23 und 24, **dadurch gekennzeichnet, daß** der Abstand der Blende (27) und des lichtempfindlichen Sensors (29) so gewählt ist, daß sich bei + bzw. - 20° Auslenkung der Meßbereich wiederholt, so daß ein Spurwinkel von - 8 bis + 8° und zusätzlich ein Winkel von - 12 bis - 28° und von + 12 bis + 28° meßbar ist.

## Claims

**1.** A method for measuring the wheel attitudes of double-track motor vehicles in which the relevant wheel angles such as toe, camber, caster, lateral run-out or the like are detected by measuring heads (4) mounted on the rims of the vehicle wheels (1) and are evaluated by processing means (10, 12) for said measuring data, wherein said measuring heads are pivotable around the extension of the rotation axis of the associated vehicle wheel,
**characterized in**
**that** the measuring heads (4) at the rotationally driven wheels of the motor vehicle are held in their respective predetermined measuring attitudes by attitude control means which are controlled by said processing means (10, 12) and adjusted by a device (13).

2. The method according to claim 1,
**characterized in**
**that** during a measuring process the individual measuring heads (4) are driven at the rotational speed of the vehicle wheels associated thereto but in the opposite sense of rotation.

3. The method according to claim 1 or 2,
**characterized in**
**that** during the rotational movement of the respective vehicle wheel the actual value of the attitude of the measuring head (4) is detected and compared with the corresponding target values, and that the twist of the measuring head in the opposite sense is controlled such that the deviation between the actual value and the target value remains approximately zero.

4. The method according to claim 1 to 3,
**characterized in**
**that** the measurements are performed in the motor vehicle running on a roadway at a predetermined speed.

5. The method according to claim 1 to 3,
**characterized in**
**that** the measurements are performed on rotationally driven roller pairs.

6. The method according to claim 1 to 3,
**characterized in**
**that** the measurements are performed when a sliding plate which is displaceable transversally to the sense of motion is crossed, wherein an activation of the measuring process takes place when a light barrier is crossed.

7. The method according to one of the claims 1 to 6,
**characterized in**
**that** the measuring data from the measuring heads are supplied to separate processing and display means by radio transmission.

8. The method according to one of the claims 1 to 7,
**characterized in**

**that** the measurement of the attitude of a vehicle wheel by means of two measuring heads (4) the attitude of which is controlled is performed in an electro-optical manner, wherein a row detector (29) of the one measuring head (4) is intermittently illuminated by a light source (26) of the other opposite measuring head, the light intensity is measured in a first measuring process in which the light source is turned off, and subsequently in a second measuring process in which the light source is turned on, the measuring data which are obtained when the light source is turned off are subtracted from the measuring data which are obtained when the light source is turned on, and the differential images which are obtained by turning off and on, respectively, the light source are added until the wanted signal has a sufficient intensity for a further processing.

9. An apparatus for measuring the wheel attitudes of a double-track motor vehicle, comprising

- a holding device (18 to 22) mounted at each vehicle wheel (1) including a measuring head (4) pivotable around the extension of the wheel axis and presenting angular sensors (2, 7) for detecting the wheel attitudes, and
- means (10, 12) for evaluating and displaying the measuring data, **characterized in that**
- said measuring head (4) is associated with an attitude control device (13) driven by said means (10, 12) and maintaining the measuring attitude of said head (4) during a measuring process in which the vehicle wheel (1) is rotating.

10. The apparatus according to claim 9,
**characterized in**
**that** said device (13) for controlling the attitude of said measuring head (4) includes a driving mechanism (13) driving said measuring head (4) in a direction opposite to the sense of rotation of the vehicle wheel (1) and at the same rotational number as the vehicle wheel, and inclination sensors (6) having the form of inclinometers, electro-optical angular sensors (7, 2) and a control unit (12).

11. The apparatus according to claim 10,
**characterized in**
**that** the driving mechanism for said measuring head is a step motor (13) or a dc motor including an increment transmitter.

12. The apparatus according to claim 10,
**characterized in**
**that** said inclination sensors (6) associated with the control unit (12) comprise pendulums freely moveable around an axis.

**13.** The apparatus according to claim 10, **characterized in that** a plurality of measuring heads (4) is provided, wherein each measuring head (4) includes two angular sensors (2, 7), each of which consists of an light source (26), an aperture (27) and a row (29) of sensors, an angular sensor (2, 7) of the one measuring head (4) interacting with a second angular sensor (2, 7) within a measuring head (4) arranged opposite thereto, and the light source (26) of the one angular sensor (2, 7) projects a light spot onto said row (29) of sensors of said second angular sensor (2, 7).

**14.** The apparatus according to one of the claims 9 to 13, **characterized in that** said or each measuring head (4) comprises only one motor-pivotable inclination sensor (42) having a measuring attitude for measuring the caster as well as the kingpin inclination and a measuring attitude which is respectively offset by further 180° for compensating the offset of the preceding measuring attitudes.

**15.** The apparatus according to claim 14, **characterized in that** the pivoting motor (46) of said inclination sensor (42) is a step motor the step number of which is proportional to the rotation angle of said sensor.

**16.** The apparatus according to claim 14, **characterized in that** said motor (46) of said inclination sensor (42) is a dc gear-motor with a flange-mounted potentiometer for determining the attitude of the sensor, wherein the target position determined by said calculator (10, 12) is adjusted by a topped servo-amplifier.

**17.** The apparatus according to one of the claims 9 to 14, **characterized in that** a component of said servo motor (13) for said or each measuring head (4) is connected to a trunnion (23) centered on the axis of said holding device (14) and the other motor component (24) is connected to said measuring head (4).

**18.** The apparatus according to claim 9 to 14, **characterized in that** said or each measuring head (4) is coupled to said holding device by means of a reverse gear.

**19.** The apparatus according to one of the claims 9 to 18, **characterized in that** a measuring arm (3) having an adjustable length is mounted on said or each measuring head (4) in a predetermined oblique attitude with respect to the horizontal line and presenting an electro-optical sensor (2) at its free end, said measuring arm being fixable in predetermined extraction attitudes.

**20.** The apparatus according to one of the claims 9 to 19, wherein said or each measuring head (4) comprises two electro-optical measuring cells (2; 7) each having a light source (26), an aperture (27) and a row sensor (29) as well as means (12) for preparing and processing, respectively, said measuring signals, **characterized in that** said slit aperture (27) comprises at least two slits (27a, 27b) in a predetermined spatial relation for generating at least two corresponding light spots on said row sensor (29), wherein the position of said light spots in one reference system corresponds to the toe angle and the distance of both light spots corresponds to the camber.

**21.** The apparatus according to claim 20, **characterized in that** said aperture (27) comprises to aperture slits (27a, 27b) arranged in V-shape.

**22.** The apparatus according to claim 20, **characterized in that** said V-shape at said aperture slit is arranged such that with a linear CCD sensor (29) both a toe angle of 8° and a camber angle of 8° can be measured and that said light source (26) is arranged between both branches of said V.

**23.** The apparatus according to claim 20, **characterized in that** said measuring cell (2; 7) between said aperture (27) and said sensor element (29) presents lateral reflecting surfaces (65a, 65b).

**24.** The apparatus according to claim 23, **characterized in that** said measuring cell (2; 7) presents a housing at the side walls of which said plane-parallel reflecting surfaces (65a, 65b) are provided.

**25.** The apparatus according to claim 23 and 24, **characterized in that** the distance between said aperture (27) and said light sensitive sensor (29) is selected such that at an excursion of +20° and -20°, respectively, the measuring range is repeated, so that a toe angle from -8 to +8° and additionally an angle from -12 to -28° and from +12 to +28° can be measured.

**Revendications**

**1.** Procédé pour vérifier l'alignement des roues de voitures automobiles à double essieu où les angles importants concernant les roues, comme le braquage, le dévers, la chasse, la voilage ou autres sont calculés au moyen de têtes de mesure (4) montées sur les jantes des roues du véhicule (1) et exploités ainsi qu'indiqués à l'aide d'un dispositif de traitement des mesures (10, 12) dans lequel les têtes de mesure peuvent être montées pivotantes sur la prolongation de l'axe de rotation de chaque roue du véhicule correspondante,
**caractérisé en ce que**
sur les roues du véhicule entraînées en rotation, les têtes de mesure (4) sont maintenues dans leur position de mesure prédéterminée par un régulateur de position commandé par le dispositif de traitement (10, 12) et ajusté par un dispositif (13).

2. Procédé conformément à la revendication 1,
**caractérisé en ce que**
les différentes têtes de mesure (4) sont commandées pendant un processus de mesure à la vitesse de rotation des roues de véhicule auxquelles elles correspondent, mais dans le sens de rotation opposé.

3. Procédé conformément à la revendication 1 ou 2,
**caractérisé en ce que**
pendant le mouvement de rotation de la roue de véhicule correspondante, la valeur réelle de la position de la tête de mesure (4) est saisie et comparée avec les valeurs théoriques correspon-dantes et que la rotation de la tête de mesure dans l'autre sens est commandée de telle façon que l'écart valeur réelle - valeur théorique est pratiquement nul.

4. Procédé conformément aux revendications 1 à 3,
**caractérisé en ce que**
les mesures sont réalisées sur le véhicule roulant sur la chaussée à une vitesse prédéterminée.

5. Procédé conformément aux revendications 1 à 3,
**caractérisé en ce que**
les mesures sont réalisées sur des paires de rouleaux entraînées en rotation.

6. Procédé conformément aux revendications 1 à 3,
**caractérisé en ce que**
les mesures sont réalisées en passant sur une plaque coulissante qui peut être coulissée en travers du sens de roulement, le processus de mesure étant activé par le passage d'une barrière lumineuse.

7. Procédé conformément à une des revendications 1 à 6,
**caractérisé en ce que**
les données des mesures provenant des têtes de mesure sont amenées par transmission radio d'un dispositif séparé de traitement et d'affichage.

8. Procédé conformément à une des revendications 1 à 7,
**caractérisé en ce que**
la vérification de l'alignement d'une roue de véhicule est réalisée par électro-optique en utilisant deux têtes de mesure (4) à position réglée : à savoir un détecteur de ligne (29) d'une des têtes de mesure (4) qui est éclairé par intermittence au moyen d'une source lumineuse (26) de l'autre tête de mesure située en face, l'intensité lumineuse est mesurée dans un premier processus de mesure avec la source lumineuse éteinte, puis dans un deuxième processus de mesure avec la source lumineuse allumée, les données obtenues avec la source lumineuse éteinte sont soustraites des données obtenues avec
la source lumineuse allumée et les différences obtenues avec la source lumineuse éteinte et allumée sont additionnées jusqu'à ce que le signal d'utilisation ait une intensité suffisante pour la poursuite du traitement.

9. Appareil pour vérifier l'alignement des roues d'une voiture automobile à double essieu comportant

   - un support (18 à 22) monté sur chaque roue du véhicule (1) avec une tête de mesure (4) pouvant être montée pivotante sur la prolongation de l'axe de rotation de la roue qui présente les capteurs d'angle (2, 7) pour saisir les alignements des roues et
   - un dispositif (10, 12) pour exploiter et afficher les mesures,

     **caractérisé en ce que**

   - la tête de mesure (4) est pourvue d'un dispositif (13) commandé par le dispositif (10, 12) qui maintient sa position de mesure pendant le processus de mesure avec la roue de véhicule (1) en rotation.

10. Appareil conformément à la revendication 9,
**caractérisé en ce que**
le dispositif (13) pour régler la position de la tête de mesure (4) contient une commande (13) qui entraîne la tête de mesure (4) dans le sens inverse du sens de rotation de la roue du véhicule (1) à la même vitesse que la roue du véhicule, ainsi que des capteurs d'inclinaison (6) sous forme d'inclinomètres, des capteurs d'angle électro-optiques (7, 2) et une unité de commande (12).

11. Appareil conformément à la revendication 10,
**caractérisé en ce que**
la commande pour la tête de mesure est un moteur pas à pas (13) ou un moteur à courant continu avec un transmetteur d'incrément.

**12.** Appareil conformément à la revendication 10, **caractérisée en ce que** les capteurs d'inclinaison (6) appartenant à l'unité de commande (12) présentent des pendules à mouvement libre.

**13.** Appareil conformément à la revendication 10, **caractérisé en ce que** il est prévu plusieurs têtes de mesure (4), chaque tête de mesure (4) contenant deux capteurs d'angle (2, 7) dont chacun se compose d'une source lumineuse (26), d'un diaphragme (27) et d'une ligne de capteurs (29) : à savoir un capteur d'angle (2, 7) de l'une des têtes de mesure (4) agit en même temps qu'un deuxième capteur d'angle (2, 7) dans une tête de mesure (4) qui lui fait face et la source lumineuse (26) de l'un des capteurs d'angle (2, 7) projette une marque lumineuse sur la ligne de capteurs (29) du deuxième capteur d'angle (2, 7).

**14.** Appareil conformément à l'une des revendications 9 à 13, **caractérisé en ce que** la ou chaque tête de mesure (4) ne présente qu'un seul capteur d'inclinaison (42) à pivotement motorisé qui comprend une position de mesure pour mesurer la chasse ou l'inclinaison des pivots de fusées ainsi qu'une position de mesure décalée de 180° pour la compensation du déport des positions de mesure précédentes.

**15.** Appareil conformément à la revendication 14, **caractérisé en ce que** le moteur de pivotement (46) du capteur d'inclinaison (42) est un moteur pas à pas dont le nombre de pas est proportionnel à l'angle de rotation du capteur.

**16.** Appareil conformément à la revendication 14, **caractérisé en ce que** le moteur (46) du capteur d'inclinaison (42) est un moteur-réducteur à courant continu avec un potentiomètre bridé pour déterminer la position du capteur, la position théorique calculée par l'ordinateur (10, 12) étant réglée par un amplificateur assisté intercalé en série.

**17.** Appareil conformément à l'une des revendications 9 à 14, **caractérisé en ce que** un élément du servo-moteur (13) pour la ou chaque tête de mesure (4) est relié à un pivot à centrage axial (23) du support (14) et que l'autre composant du moteur (24) est relié à la tête de mesure (4).

**18.** Appareil conformément à une des revendications 9 à 14, **caractérisé en ce que** la ou chaque tête de mesure (4) est couplée au support par un mécanisme de renversement.

**19.** Appareil conformément à une des revendications 9 à 18, **caractérisé en ce que** sur la ou chaque tête de mesure (4) est monté un bras de mesure réglable en longueur (3) dans une position prédéterminée en biais par rapport à l'horizontale qui présente à son extrémité libre un capteur électro-optique (2) et peut être fixé dans des positions télescopiques prédéterminées.

**20.** Appareil conformément à l'une des revendications 9 à 19, **caractérisé en ce que** la ou chaque tête de mesure (4) présente deux cellules de mesure électro-optiques (2, 7) avec chacune une source lumineuse (26), un diaphragme (27) et un capteur de ligne (29) ainsi qu'un dispositif (12) pour préparer ou traiter les signaux de mesure, **caractérisées en ce que** le diaphragme à fente (27) présente au moins deux fentes (27a, 27b) dans un ordre de placement prédéterminé pour la production d'au moins deux marques lumineuses correspondantes sur le capteur de ligne (29), la situation des marques lumineuses correspondant dans un système de référence à l'angle de braquage et l'écart entre les deux marques lumineuses correspondant à l'angle de dévers.

**21.** Appareil conformément à la revendication 20, **caractérisé en ce que** le diaphragme (27) présente deux fentes (27a, 27b) disposées en forme en V.

**22.** Appareil conformément à la revendication 20, **caractérisé en ce que** la forme en V sur la fente du diaphragme est conçue de telle façon qu'avec un capteur CCD linéaire (29), on peut aussi bien mesurer un angle de braquage à 8° qu'un angle de dévers à 8° et que la source lumineuse (26) est disposée entre les deux montants du V.

**23.** Appareil conformément à la revendication 20, **caractérisé en ce que** la cellule de mesure (2, 7) présente entre le diaphragme (27) et l'élément du capteur (29) des surfaces latérales réfléchissantes (65a, 65b).

**24.** Appareil conformément à la revendication 23, **caractérisé en ce que** la cellule de mesure (2, 7) présente un boîtier sur les parois latérales duquel sont prévues les surfaces métallisées à faces planes et parallèles (65a, 65b).

**25.** Appareil conformément aux revendications 23 et 24,

**caractérisé en ce que**

la distance entre le diaphragme (27) et le capteur sensible à la lumière (29) est choisie de telle façon que la zone de mesure se répète avec + ou - 20° de décalage afin de pouvoir mesurer un angle de braquage de - 8 à + 8° et, de plus, un angle de - 12 à - 28° et de + 12 à + 28°.

Fig. 1

# Fig. 2

# Fig. 3a

# Fig. 3b

Fig. 4

Fig. 5

Fig. 6

# Fig. 7

# Fig. 8

a)

Spur: 0°    Sturz: 0°

$U_{out}$

33a    33b

−8°    0°    +8°
100    1000    1900 Pixel

b)

Spur: 0°    Sturz: 7°

$U_{out}$

33a    33b

−8°    0°    +8°
100    1000    1900 Pixel

c)

Spur: 7°    Sturz: 0°

$U_{out}$

33a    33b

−8°    0°    +8°
100    1000    1900 Pixel

d)

Spur: 7°    Sturz: 7°

$U_{out}$

33a    33b

−8°    0°    +8°
100    1000    1900 Pi

Fig. 9

Fig. 10

# Fig. 11